# EUROPÄISCHE PATENTSCHRIFT

(11) **EP 2 820 314 B1**
(45) Veröffentlichungstag und Bekanntmachung des Hinweises auf die Patenterteilung: **12.10.2016**
(21) Anmeldenummer: 13709816.6
(22) Anmeldetag: 01.03.2013
(51) Int. Cl.: F16B 9/02, B60N 2/48

(54) **SPIELFREIES VERBINDUNGSMITTEL**
PLAY-FREE CONNECTION MEANS
MOYEN DE RACCORDEMENT SANS JEU

(30) Priorität: 02.03.2012 DE 102012004026
(43) Veröffentlichungstag der Anmeldung: 07.01.2015
(73) Patentinhaber: Johnson Controls GmbH, 51399 Burscheid (DE)
(72) Erfinder: SCHMITZ, Andreas, 51399 Burscheid (DE)
(74) Vertreter: Wolff, Felix
(86) Internationale Anmeldenummer: PCT/EP2013/054153
(87) Internationale Veröffentlichungsnummer: WO 2013/127992

(56) Entgegenhaltungen:
- EP-A1- 0 913 591
- WO-A1-80/02313
- WO-A2-2008/151805

## Beschreibung

Die vorliegende Erfindung betrifft ein Verbindungsmittel eines Fahrzeuginnenausstattungsteils mit einem Aufnahmeteil, das ein Endfitting, vorzugsweise reversibel, aufnimmt.

Derartige Verbindungsmittel sind aus dem Stand der Technik, beispielsweise der WO 2008/151805 A2 bekannt.

Es war die Aufgabe der vorliegenden Erfindung, derartige Verbindungsmittel weiter zu verbessern.

Gelöst wird die Aufgabe mit einem Verbindungsmittel mit den Merkmalen aus Anspruch 1.

Die vorliegende Erfindung betrifft ein Verbindungsmittel eines Fahrzeuginnenausstattungsteils mit einem Aufnahmeteil, das ein Endfitting, vorzugsweise reversibel, aufnimmt. Bei dem Endfitting kann es sich um ein beliebiges Bauteil handeln, das in ein Aufnahmeteil einführbar ist. Das Endfitting kann sich beim Einführen in das Aufnahmeteil zumindest teilweise, insbesondere reversibel, verformen. Beispielsweise ist das Endfitting kugelförmig oder zylindrisch gestaltet. Dieses Kugelfitting ist an einem Bauteil der Fahrzeuginnenausstattung vorgesehen, das eine Anschlagfläche aufweist, die im verbundenen Zustand, d. h. wenn sich das Endfitting innerhalb des Aufnahmeteils befindet, an einer Anlagefläche des Aufnahmeteils anliegt. Dadurch ist das erfindungsgemäße Verbindungsmittel spielfrei. Die maximale Eindringtiefe des Fittings in das Aufnahmeteil entspricht einem Abstand zwischen dem Endfitting und der Anschlagfläche.

Weiterhin bevorzugt ist das Fitting mit einem Verbindungsmittel an dem Bauteil befestigt. Bei dem Verbindungsmittel kann es sich beispielsweise um ein flexibles Verbindungsmittel, beispielsweise ein Seil, insbesondere ein Stahlseil, beispielsweise die Seele eines Bowdenzuges, handeln. Das Verbindungsmittel kann aber auch starr sein. Das Endfitting ist vorzugsweise kraft-, form- und/oder stoffschlüssig mit diesem Seil verbunden. Vorzugsweise entspricht die freie Länge des Verbindungsmittels, d. h. die Länge zwischen dem Fitting und der Anschlagfläche, der Eindringtiefe des Fittings in das Aufnahmeteil. Dadurch ist das erfindungsgemäße Verbindungsmittel spielfrei.

Weiterhin bevorzugt weist das Aufnahmeteil eine Öffnung auf, deren Größe von dem Endfitting reversibel veränderbar ist. Beim Einführen des Endfittings in das Aufnahmeteil vergrößert sich diese Öffnung vorzugsweise und schnappt besonders bevorzugt in ihre ursprüngliche Größe zumindest teilweise zurück, sobald sich das Endfitting innerhalb des Aufnahmeteils befindet. Vorzugsweise ragt in die Öffnung ein Mittel, beispielsweise eine Nase, hinein, mit der der Querschnitt der Öffnung veränderbar ist. Vorzugsweise ist das Mittel an einem Schieber vorgesehen, der in dem Aufnahmeteil längsverschieblich vorgesehen ist. Besonders bevorzugt ist der Schieber in Richtung der Öffnung elastisch vorgespannt.

Das Verbindungsmittel eignet sich insbesondere zum Verbinden zweier Segmente eines Kraftübertragungsmittels, insbesondere eines Zugkraftübertragungsmittels, beispielsweise eines Bowdenzuges. Vorzugsweise handelt es sich bei dem Übertragungsmittel um die Seele eines Bowdenzuges.

Vorzugsweise weist das Verbindungsmittel ein Mittel zum Lösen der Verbindung zwischen dem Aufnahmeteil und dem Endfitting auf.

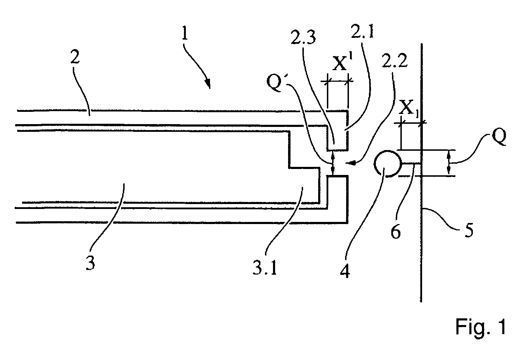

Im Folgenden wird die Erfindung anhand der einzigen Figur 1 erläutert. Diese Erläuterungen sind lediglich beispielhaft und schränken den allgemeinen Erfindungsgedanken nicht ein.

Figur 1 zeigt das erfindungsgemäße Verbindungsmittel 1, das ein Aufnahmeteil 2 mit einer Öffnung 2.2 aufweist. Des Weiteren weist das erfindungsgemäße Verbindungsmittel ein Bauteil mit einer Anschlagfläche 5 auf, an dem ein Endfitting 4 mittels eines Befestigungsmittels 6 vorgesehen ist. Zum Verbinden des Bauteils mit dem Aufnahmeteil 2 wird das Endfitting 4 durch die Öffnung 2.2 in das Aufnahmeteil eingeführt. Dabei verschiebt sich die an einem Schieber 3 vorgesehene Nase 3.1 nach links und gibt den Querschnitt Q' der Öffnung 2.2 vollständig frei, so dass das Fitting 4 durch die Öffnung in das Aufnahmeteil eingeführt werden kann. Sobald sich das Fitting 4 vollständig in dem Aufnahmeteil befindet, schnappt der Schieber, der beispielsweise durch eine Feder in Richtung der Öffnung 2.2 vorgespannt ist, selbsttätig zurück und verkleinert damit den Querschnitt Q' der Öffnung 2.2 so, dass der Querschnitt Q des Fittings 4 nicht mehr durch die reduzierte Öffnung 2.2 passt und sich das Endfitting 4 hinter dem Vorsprung 2.3 des Aufnahmeteils 2 verhakt. Erfindungsgemäß ist nun die Dicke X¹ des Vorsprungs 2.3 und die Länge X₁ des Befestigungsmittels 6 zumindest im Wesentlichen identisch vorgesehen, so dass die Anschlagfläche 5 des Bauteils an der Anlagefläche 2.1 des Aufnahmeteils 2 anliegt, sobald sich das Fitting 4 hinter dem Vorsprung 2.3 befindet. Dadurch weist das erfindungsgemäße Verbindungsmittel kein Spiel auf, so dass Kräfte, insbesondere Zugkräfte, spielfrei übertragen werden können und keine Klappergeräusche auftreten.

### Bezugszeichenliste:

- 1: Verbindungsmittel
- 2: Aufnahmeteil
- 2.1: Anlagefläche des Aufnahmeteils
- 2.2: Öffnung des Aufnahmeteils
- 2.3: Vorsprung
- 3: Schieber
- 3.1: Mittel, Nase
- 4: Endfitting
- 5: Anschlagfläche
- 6: Befestigungsmittel
- Q: Querschnitt des Endfittings
- Q': Querschnitt der Öffnung 2.2
- X¹: maximale Eindringtiefe des Endfittings in das Aufnahmeteil
- X₁: Abstand zwischen dem Endfitting 4 und der Anschlagfläche 5, freie Länge des Befestigungsmittels 6

## Patentansprüche

1. Verbindungsmittel (1) eines Fahrzeuginnenausstattungsteils mit einem Aufnahmeteil (2), das ein Endfitting (4), vorzugsweise reversibel, aufnimmt, wobei das Endfitting an einem Bauteil mit einer Anschlagfläche (5) vorgesehen ist, die im verbundenen Zustand an einer Anlagefläche (2.1) des Aufnahmeteils (2) anliegt,
**dadurch gekennzeichnet, dass** die maximale Eindringtiefe (X¹) des Fittings (4) in das Aufnahmeteil (2) dem Abstand (X₁) zwischen dem Endfitting (4) und der Anschlagfläche (5) entspricht.

2. Verbindungsmittel (1) nach Anspruch 1 , **dadurch gekennzeichnet, dass** das Fitting mit einem Befestigungsmittel (6) an dem Bauteil befestigt ist.

3. Verbindungsmittel (1) nach Anspruch 2, **dadurch gekennzeichnet, dass** die freie Länge (X₁) des Verbindungsmittels (6) der Eindringtiefe (X¹) des Fittings in das Aufnahmeteil (2) entspricht.

4. Verbindungsmittel (1) nach einem der voranstehenden Ansprüche, **dadurch gekennzeichnet, dass** das Aufnahmeteil (2) eine Öffnung (2.2) aufweist, deren Größe von dem Endfitting (4) reversibel veränderbar ist.

5. Verbindungsmittel (1) nach Anspruch 4, **dadurch gekennzeichnet, dass** in die Öffnung (2.2) ein Mittel (3.1) hineinragt, mit dem deren Querschnitt (Q') veränderbar ist.

6. Verbindungsmittel (1) nach Anspruch 5, **dadurch gekennzeichnet, dass** das Mittel (3.1) an einem Schieber (3) vorgesehen ist, der in dem Aufnahmeteil verschieblich vorgesehen ist.

7. Verbindungsmittel (1) nach Anspruch 6, **dadurch gekennzeichnet, dass** der Schieber (3) in Richtung der Öffnung (2.2) vorgespannt ist.

8. Verbindungsmittel (1) nach einem der voranstehenden Ansprüche, **dadurch gekennzeichnet, dass** es zwei Segmente eines Kraftübertragungsmittels verbindet.

9. Verbindungsmittel (1) nach einem der voranstehenden Ansprüche, **dadurch gekennzeichnet, dass** es ein Mittel zum Lösen der Verbindung zwischen dem Aufnahmeteil (2) und dem Endfitting aufweist.

## Claims

1. Connection means (1) of a vehicle interior trim part having a receptacle part (2) which receives an end fitting (4), preferably in a reversible manner, wherein the end fitting is provided on a component with a stop face (5) which bears against a bearing face (2.1) of the receptacle part (2) in the connected state, **characterized in that** the maximum penetration depth (X¹) of the fitting (4) into the receptacle part (2) corresponds to the spacing (X₁) between the end fitting (4) and the stop face (5).

2. Connection means (1) according to claim 1, **characterized in that** the fitting is fastened to the component by way of a fastening means (6).

3. Connection means (1) according to Claim 2, **characterized in that** the free length (X₁) of the connection means (6) corresponds to the penetration depth (X¹) of the fitting into the receptacle part (2).

4. Connection means (1) according to one of the preceding claims, **characterized in that** the receptacle part (2) has an opening (2.2), the size of which can be changed reversibly by the end fitting (4).

5. Connection means (1) according to Claim 4, **characterized in that** a means (3.1) protrudes into the opening (2.2), by way of which means (3.1) the cross section (Q') of said opening (2.2) can be changed.

6. Connection means (1) according to Claim 5, **characterized in that** the means (3.1) is provided on a slide (3) which is provided displaceably in the receptacle part.

7. Connection means (1) according to Claim 6, **characterized in that** the slide (3) is prestressed in the direction of the opening (2.2).

8. Connection means (1) according to one of the preceding claims, **characterized in that** it connects two segments of a force transmission means.

9. Connection means (1) according to one of the preceding claims, **characterized in that** it has a means for releasing the connection between the receptacle part (2) and the end fitting.

## Revendications

1. Moyen de raccordement (1) d'une pièce d'équipement intérieur d'un véhicule, comprenant une partie de réception (2) qui reçoit un raccord d'extrémité (4), de préférence de manière réversible, le raccord d'extrémité étant pourvu, au niveau d'un composant, d'une surface de butée (5), qui, dans l'état raccordé, s'applique contre une surface de butée (2.1) de la partie de réception (2), **caractérisé en ce que** la profondeur d'enfoncement maximale (X¹) du raccord (4) dans la partie de réception (2) correspond à la distance (X₁) entre le raccord d'extrémité (4) et la surface de butée (5).

2. Moyen de raccordement (1) selon la revendication 1, **caractérisé en ce que** le raccord est fixé au composant par un moyen de fixation (6).

3. Moyen de raccordement (1) selon la revendication 2, **caractérisé en ce que** la longueur libre (X₁) du moyen de raccordement (6) correspond à la profondeur d'enfoncement (X¹) du raccord dans la partie de réception (2).

4. Moyen de raccordement (1) selon l'une quelconque des revendications précédentes, **caractérisé en ce que** la partie de réception (2) présente une ouverture (2.2) dont la dimension peut être modifiée de manière réversible par le raccord d'extrémité (4).

5. Moyen de raccordement (1) selon la revendication 4, **caractérisé en ce qu'**un moyen (3.1) pénètre dans l'ouverture (2.2) dont la section transversale (Q') peut être modifiée par celui-ci.

6. Moyen de raccordement (1) selon la revendication 5, **caractérisé en ce que** le moyen (3.1) est prévu sur un coulisseau (3) qui est prévu de manière déplaçable dans la partie de réception.

7. Moyen de raccordement (1) selon la revendication 6, **caractérisé en ce que** le coulisseau (3) est précontraint dans la direction de l'ouverture (2.2).

8. Moyen de raccordement (1) selon l'une quelconque des revendications précédentes, **caractérisé en ce qu'**il relie deux segments d'un moyen de transfert de force.

9. Moyen de raccordement (1) selon l'une quelconque des revendications précédentes, **caractérisé en ce qu'**il présente un moyen pour libérer le raccordement entre la partie de réception (2) et le raccord d'extrémité.
